# EUROPEAN PATENT SPECIFICATION

(11) **EP 1 536 444 B1**
(45) Date of publication and mention of the grant of the patent: **20.02.2008**
(21) Application number: 04027472.2
(22) Date of filing: 19.11.2004
(51) Int. Cl.: H01H 33/12, B60M 3/04

(54) **On-load disconnector for power lines, particularly for railroad power lines**
Lasttrennschalter für Stromversorgungsleitungen, insbesondere für Bahnstromversorgung
Sectionneur de puissance pour lignes électriques, en particulier pour l'alimentation de chemin de fer électrique

(30) Priority: 26.11.2003 IT MI20032311
(43) Date of publication of application: 01.06.2005
(73) Proprietor: Pfisterer S.r.l., 20017 Passirana di Rho (Prov. of Milano) (IT)
(72) Inventor: Nannini, Osvaldo, 20146 Milano (IT)
(74) Representative: Modiano, Micaela Nadia

(56) References cited:
- DE-A- 2 819 019
- FR-A- 1 534 114
- FR-A- 2 685 540

## Description

The present invention relates to an on-load disconnector for power lines, particularly for railroad power lines.

On-load or live disconnectors for railroad power lines are known.

A type of such disconnectors is substantially composed of a fixed contact, which is supported by a supporting structure and is electrically connected to a first power line, and by a moving contact which is electrically connected to a second power line to be connected and disconnected with respect to the first line. The moving contact is actuated by a lever so that it can be engaged with the fixed contact in order to provide the closed position of the disconnector, in which the two lines are electrically connected to each other, or be disengaged from the fixed contact in order to provide the open position of the disconnector, in which the electrical connection between the two lines is interrupted. Such disconnector is provided with two spark-gap electrodes, which quench the electric arc generated during the disengagement of the moving contact from the fixed contact. The spark-gap electrodes are electrically connected respectively to the fixed contact and to the moving contact and are rigidly mounted on the supporting structure of the disconnector. Moreover, the spark-gap electrodes are arranged side by side and have a curved shape, so as to move apart from each other, starting from their end that is connected to the supporting structure proximate to the electric contacts toward their free end. In these kinds of disconnectors, when the moving contact disengages from the fixed contact, the moving contact still remains electrically connected for a certain time, by means of an auxiliary contact, to the spark-gap electrode that is connected to the fixed contact. When also the auxiliary contact separates from this spark-gap electrode, the electric arc is generated between these two elements until the auxiliary contact approaches the other spark-gap electrode enough to cause the transfer of the electric arc also on this spark-gap electrode connected to the moving contact. At this point, the electric arc is between the two spark-gap electrodes and, as a consequence of the coil effect, typical of spark-gap electrodes, and of the generated heat, is propelled along the spark-gap electrodes, which by their diverging shape increase the resistance of the arc until they quench it.

Another known type of disconnector is substantially composed of two fixed contacts, which are supported by a supporting structure and are electrically connected respectively to a first power line and to a second power line to be connected or disconnected with respect to each other, and a moving contact, which can engage the fixed contacts so as to provide their electrical connection (closed position of the disconnector) or can be disengaged in order to interrupt said electrical connection (open position of the disconnector). This kind of disconnector is generally equipped, for each fixed contact, with two spark-gap electrodes connected respectively to the fixed contact and to the moving contact. In this type of disconnector, the spark-gap electrodes are shaped so as to remain in contact, during the disengagement of the moving contact from the fixed contact, for a certain time after the moving contact has disengaged from the fixed contact. The spark-gap electrodes, due to the movement of the moving contact and due to their shape, then separate, producing the electric arc, which is moved away along the spark-gap electrodes and quenched.

In both of these disconnectors, it has been observed that the electric arc persists on the spark-gap electrodes for a time that causes localized damage of the spark-gap electrodes, which can lead to their breakage or melting, rendering the disconnector inoperable. In order to avoid this danger, frequent maintenance is required on disconnectors, significantly affecting the operating costs.

FR-A-1 534 114 discloses an on-load disconnector for power lines having a combination of structural features as set forth in the precharacterizing portion of the appended claim 1, and in which in particular the first spark-gap electrode is made of an elevated elastic material and with a reduced diameter such that during the disengagement of the second spark-gap electrode from the first spark-gap electrode the latter bends and then whips rapidly out of engagement from the former.

FR-A-2 685 540 also discloses an on-load disconnector for power lines that relies on relatively elastic spark-gap electrodes.

The aim of the present invention is to solve the problems noted above by providing a disconnector that ensures quenching of the electric arc during the opening of the disconnector quickly enough to considerably limit the wear of the components affected by the electric arc.

Within this aim, an object of the invention is to provide a disconnector that considerably increases the time that elapses between maintenance interventions, so as to reduce their number and accordingly the operating costs.

Another object of the invention is to provide a disconnector that is capable of indicating remotely and safely its open and/or closed position.

In accordance with the invention, there if provided an on-load disconnector for power lines as defined in the appended claims.

Further characteristics and advantages of the invention will become better apparent from the description of a preferred but not exclusive embodiment of the disconnector according to the invention, illustrated by way of non-limiting example in the accompanying drawings, wherein:
Figure 1 is a schematic perspective view of the disconnector according to the invention, with the moving contact disengaged from the fixed contacts (open position of the disconnector);
Figure 2 is a schematic perspective view of the disconnector according to the invention, taken from a different angle with respect to Figure 1, with the moving contact engaged with the fixed contacts;
Figure 3 is a view, similar to Figure 1, of the disconnector, with the moving contact engaged with the fixed contacts (closed position of the disconnector);
Figure 4 is a perspective view of the disconnector according to the invention in the same condition as in Figure 3, but taken from a different angle;
Figures 5 and 6 are perspective views of the disconnector according to the invention, with the moving contact disengaged from the fixed contacts;
Figure 7 is a schematic perspective view of a detail of the disconnector according to the invention, related to a fixed contact and to a spark-gap electrode;
Figure 8 is a schematic perspective view of a detail of the disconnector according to the invention related to the moving contact and to two spark-gap electrodes.

With reference to the figures, the disconnector according to the invention, generally designated by the reference numeral 1, comprises a supporting structure 2, which supports, by means of isolators 3a, 3b, two fixed contacts 4a, 4b, which are electrically connected to respective power lines 30 and 31, which are shown only schematically and must be electrically connected or disconnected with respect to each other by means of the disconnector 1.

The disconnector according to the invention comprises a moving contact 5, which can engage the fixed contacts 4a, 4b in order to provide electrical connection between the two power lines (closed position of the disconnector) or can be disengaged from the fixed contacts in order to interrupt the electrical connection between the power lines connected to the fixed contacts 4a, 4b (open position of the disconnector).

More particularly, the moving contact 5 is fixed to an isolator 6, which in turn is fixed to an opening-closing lever 7, which is pivoted at one of its ends, which is spaced from the moving contact 5, to the supporting structure 2 about a main axis 7a, which is preferably horizontal.

Each one of the fixed contacts 4a, 4b is preferably constituted by a contact with elastic laminas that face each other on planes that are substantially perpendicular to the main axis 7a and form between them a receptacle 8 for the moving contact 5.

The moving contact 5 is preferably constituted by a substantially U-shaped lamina, which can be inserted, during engagement, by means of its two free arms 5a, 5b arranged on planes that are substantially perpendicular to the main axis 7a, in the receptacles 8 formed by the elastic laminas of the fixed contacts 4a, 4b. The two free arms 5a, 5b are connected to each other by a cross-member 5c, which is fixed to the isolator 6.

The disconnector is further provided, for each fixed contact 4a, 4b, with two spark-gap electrodes 9a, 10a, 9b, 10b. Each pair of spark-gap electrodes is composed of a first spark-gap electrode 9a, 9b, which is electrically connected to the corresponding fixed contact 4a, 4b, and of a second spark-gap electrode 10a, 10b, which is electrically connected to the moving contact 5.

According to the invention, in each pair of spark-gap electrodes 9a, 10a and 9b, 10b, one spark-gap electrode is provided with engagement means that can engage the other spark-gap electrode of the same pair after the engagement of the moving contact 5 with the fixed contacts 4a, 4b and can disengage from the other spark-gap electrode after the disengagement of the moving contact 5 from the fixed contacts 4a, 4b. The disconnector further comprises elastic means, which can be loaded during disengagement of the moving contact 5 from the fixed contacts and act on one or both of the spark-gap electrodes of a same pair in order to increase the speed with which one spark-gap electrode moves away from the other spark-gap electrode during their disengagement.

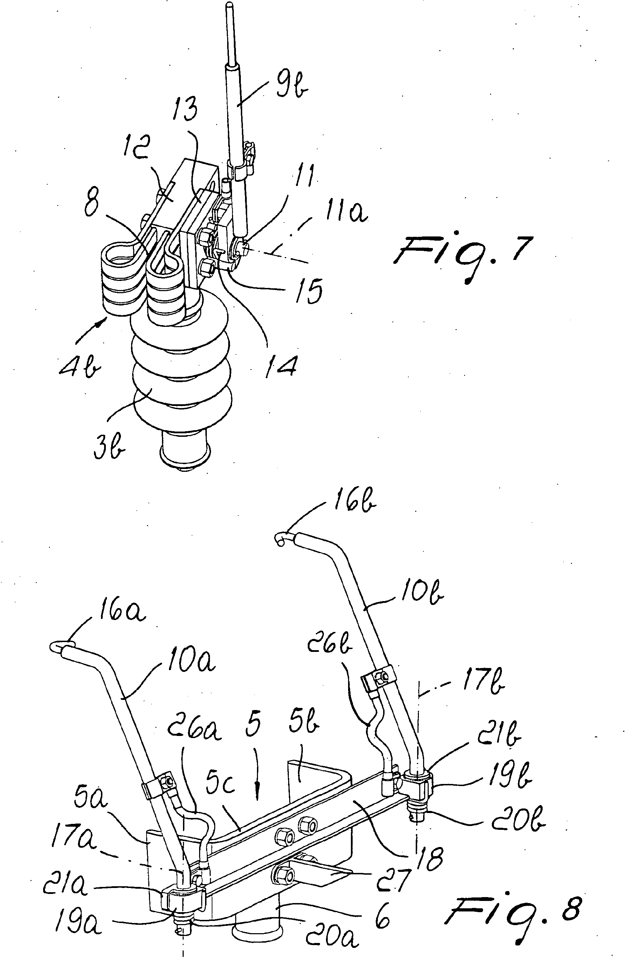

Preferably, the first spark-gap electrode 9a, 9b is provided as a substantially straight rod and is supported by the supporting structure 2 so that it can rotate about a rotation axis 11a, which is substantially parallel to the main axis 7a. In greater detail, as shown in particular in Figure 7, in each fixed contact the elastic laminas that constitute the fixed contact are locked between a central plate 12 and contrast plates 13. The lower end of the first spark-gap electrode 9a, 9b is pivoted to one of these contrast plates 13 by means of a pivot 11, the axis of which constitute the axis 11a about which the first spark-gap electrode 9a, 9b can rotate with respect to the contrast plate 13 in order to follow the corresponding second spark-gap electrode 10a, 10b during the movement of the moving contact 5 away from the fixed contacts 4a, 4b as a consequence of the rotation of the opening/closing lever 7 about the main axis 7a.

The above described elastic means that increase the speed of the mutual disengagement of the spark-gap electrodes of a same pair preferably act on the first spark-gap electrode 9a, 9b in order to contrast its rotation about the axis 11 a in the direction that matches the rotation of the opening-closing lever 7, about the main axis 7a, during the disengagement of the moving contact 5 from the fixed contacts 4a, 4b. Said elastic means can be constituted by a spring 14, which is wound around the pivot 11 and engages the first spark-gap electrode 9a, 9b with one of its ends and the contrast plate 13 with the opposite end. The rotation of the first spark-gap electrode 9a, 9b about the axis 11 a in the opposite direction, which is caused by the elastic reaction of the spring 14, is limited by an abutment 15, which is rigidly coupled to the contrast plate 13, against which a lug of the first spark-gap electrode 9a, 9b that is located proximate to the pivot 11 engages in a given rotational position.

The second spark-gap electrode 10a, 10b of each pair of spark-gap electrodes is mounted on the opening-closing lever 7.

The second spark-gap electrode 10a, 10b of each pair of spark-gap electrodes is preferably provided as a rod and is connected, by means of one of its ends, to the opening-closing lever 7. The engagement means cited above comprise a hook-shaped portion 16a, 16b, which is provided at the other end of the second spark-gap electrode 10a, 10b and can engage the corresponding first spark-gap electrode 9a, 9b.

The second spark-gap electrode 10a, 10b can rotate with respect to the opening-closing lever 7 that supports it, in contrast with elastic return means, about a rotation axis 17a, 17b, which is substantially perpendicular to the rotation axis 11 a, in order to engage, by means of its hook-shaped portion 16a, 16b, the first spark-gap electrode 9a, 9b substantially at the end of the rotation of the opening-closing lever 7 that engages the moving contact 5 with the fixed contacts 4a, 4b.

More particularly, as shown in particular in Figure 8, a longitudinal member 18 is fixed to the back of the cross-member 5c of the moving contact 5 that is directed away from the fixed contacts 4a, 4b and supports, at its longitudinal ends, two blocks 19a, 19b on which the ends of the corresponding second spark-gap electrode 10a, 10b that are opposite to the hook-shaped portion 16a, 16b are pivoted about the axes 17a, 17b.

Without altering the fact that the orientation of the spark-gap electrodes of the disconnector according to the invention may be changed according to the requirements, in the illustrated embodiment the first spark-gap electrodes 9a, 9b are arranged substantially vertically and the second spark-gap electrodes 10a, 10b are arranged laterally and externally to the two spark-gap electrodes 9a, 9b. When the moving contact 5 engages the fixed contacts 4a, 4b, the lower end of the spark-gap electrodes 10a, 10b is arranged substantially vertically so as to be pivoted to the corresponding block 19a, 19b about a vertical axis constituted by the axis 17a, 17b.

Each second spark-gap electrode 10a, 10b has, along its extension, one or more bends, so that its hook-shaped portions 16a, 16b lie on a transverse plane with respect to the axis of the corresponding first spark-gap electrode 9a, 9b with which it engages. In the condition of engagement of the moving contact 5 with the fixed contacts 4a, 4b, the ends of the second spark-gap electrodes 10a, 10b provided with the shaped portions 16a, 16b are arranged on a substantially horizontal plane if, as illustrated, the first spark-gap electrodes 9a, 9b are arranged vertically.

Substantially, each second spark-gap electrode 10a, 10b, if engaged or disengaged with respect to the first spark-gap electrode 9a, 9b, has its hook-shaped portion 16a, 16b in a position for interfering with the first spark-gap electrode 9a, 9b. In order to allow the hook-shaped portion 16a, 16b to engage the corresponding first spark-gap electrode 9a, 9b, the second spark-gap electrode 10a, 10b rotates about the axis 17a, 17b with respect to the block 19a, 19b that supports it. This rotation is contrasted by the elastic return means cited above, which can be constituted by a spring 20a, 20b, which is coiled around the end of said spark-gap electrode 10a, 10b and engages, with one of its ends, said end of the spark-gap electrode 10a, 10b and, with its other end, the block 19a, 19b. The rotation of the second spark-gap electrode 10a, 10b about the axis 17a, 17b as a consequence of the elastic reaction of the spring 20a, 20b is delimited by the engagement of an arm 21a, 21b, which is rigidly coupled to the spark-gap electrode 10a, 10b, against an abutment formed by said block 19a, 19b.

Advantageously, means for sensing the engagement position (closed position of the disconnector) and/or the disengagement position (open position of the disconnector) of the moving contact 5 with respect to the fixed contacts 4a, 4b are provided.

The sensor means preferably comprise a first electrical switch 22, which is connected to the supporting structure 2 in such a position that it is contacted by a first abutment 23, which is connected to, or integrated in, the opening-closing lever 7, upon completion of the rotation of the opening-closing lever 7 that engages the moving contact 5 with the fixed contacts 4a, 4b.

Moreover, the sensor means comprise a second electrical switch 24, which is connected to the supporting structure 2 in a position in which it is contacted by a second abutment 27, which is connected to the opening-closing lever 7, upon completion of the rotation of the opening-closing lever 7 that disengages the moving contact 5 from the fixed contacts 4a, 4b.

The electrical switches 22 and 24 can be connected to optical indication means and/or to a transmission line, in order to remotely report the operating condition (closed position and/or open position) of said disconnector.

The fixed contacts 4a, 4b and the moving contact 5 are provided by means of materials that are usually used for these applications, such as for example copper or alloys thereof with high electrical conductivity.

The spark-gap electrodes 9a, 9b, 10a, 10b may be provided by means of a steel body. At least the regions of mutual contact are preferably made of a material that is highly heat-resistant, such as for example tungsten or alloys thereof.

Conveniently, the body of the spark-gap electrodes 9a, 9b, 10a, 10b is directly connected, by means of an electrical cable 25a, 25b, 26a, 26b that is flexible so as to allow the movement of said spark-gap electrodes, to the corresponding fixed contact 4a, 4b or to the moving contact 5 so as to avoid regions of unsteady electrical contact or with a high electrical resistance between these elements.

The number of fixed contacts and accordingly the number of moving contacts or of the branches of the moving contact or contacts may vary according to the requirements. It should be noted that the disconnector according to the invention may also have a single fixed contact that is electrically connected to a first power line and a moving contact that is constantly connected to a second power line and can engage and disengage said fixed contact in order to provide electrical connection between the two power lines or interrupt said connection, without abandoning the scope of the protection of the present invention. In this case, instead of two pairs of spark-gap electrodes, it is possible to provide a single pair of spark-gap electrodes composed of a first spark-gap electrode that is similar to the electrode 9a or 9b, and of a second spark-gap electrode that is similar to the electrode 10a, 10b, which are connected respectively to the fixed contact and to the moving contact.

The rotation of the opening-closing lever 7 about the main axis 7a in order to engage and disengage the moving contact 5 with respect to the fixed contacts 4a, 4b can be achieved by means of conventional devices, or preferably by means of a device 28, which is operated manually or automatically, and is contained in the supporting structure 2 provided as a box-like structure to be arranged, in the particular case of the application of the disconnector to railroad power lines, at the top of a pole or other elevated structure. The device 28 is preferably constituted by a device of the type described in a co-pending patent application by the same Applicant, which is assumed included herein by reference. Said device is adapted to ensure high speed of the opening-closing lever 7 when the moving contact 5 disengages and engages the fixed contacts 4a, 4b.

Operation of the disconnector according to the invention is as follows.

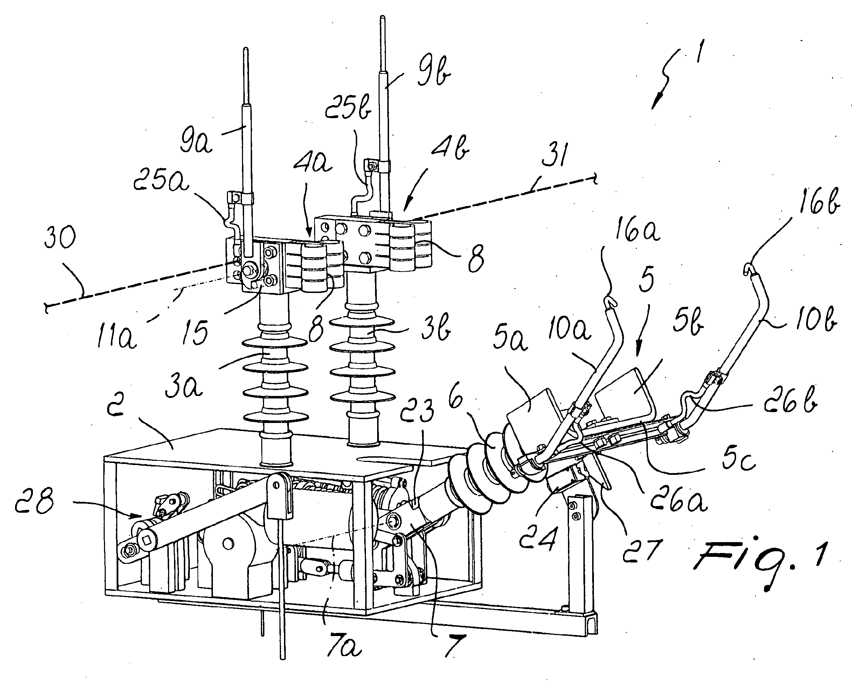

When the moving contact 5 is disengaged from the fixed contacts 4a, 4b, providing the open position of the disconnector, the disconnector according to the invention has the appearance shown in Figure 1, in which the opening-closing lever 7 is turned about the main axis 7a so as to maintain the moving contact 5 at a distance from the fixed contacts 4a, 4b that excludes with absolute safety generation of an electrical contact or of an electric arc between these contacts. In this condition, the power line 30 is disconnected from the power line 31. With the opening-closing lever 7 in this position, the abutment 27 is engaged with the electric switch 24 that indicates the open position of the disconnector.

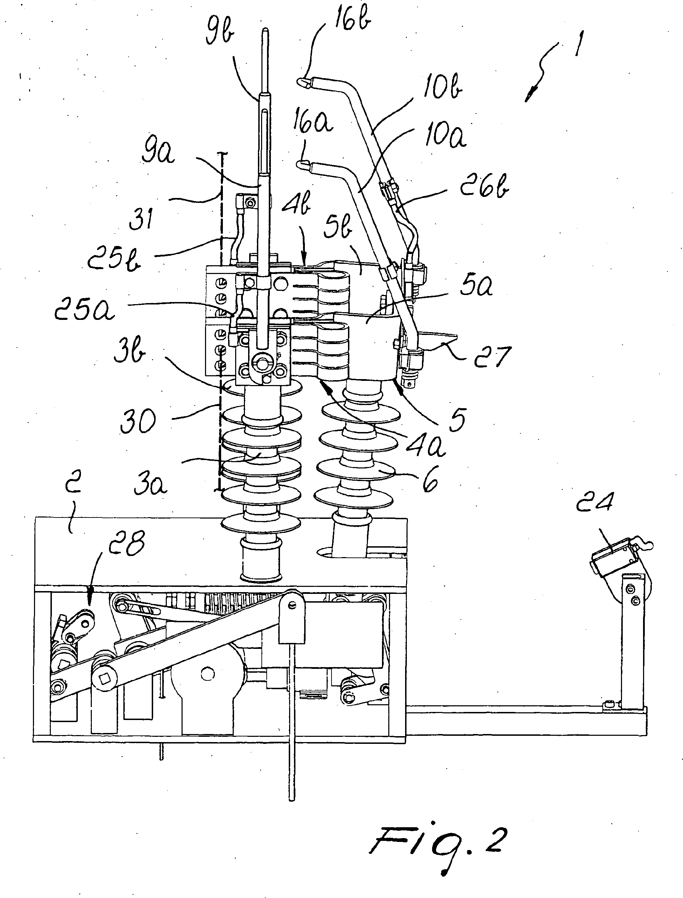

If the power lines 30, 31 are to be connected, the opening-closing lever 7 is turned manually or mechanically about the main axis 7a with respect to the supporting structure 2, so as to move the fixed contact 5 toward the moving contacts 4a, 4b, until the arms 5a, 5b of the fixed contact 5 are engaged in the receptacles 8 of the fixed contacts 4a, 4b, as shown in Figure 2. It should be noted that when the moving contact 5 engages the fixed contacts 4a, 4b, the spark-gap electrodes 9a, 9b, 10a, 10b have not yet made contact with each other, thus preventing the flow of current through the spark-gap electrodes, which if the disconnector closes on load or in the presence of a short-circuit might damage the spark-gap electrodes 9a, 9b, 10a, 10b.

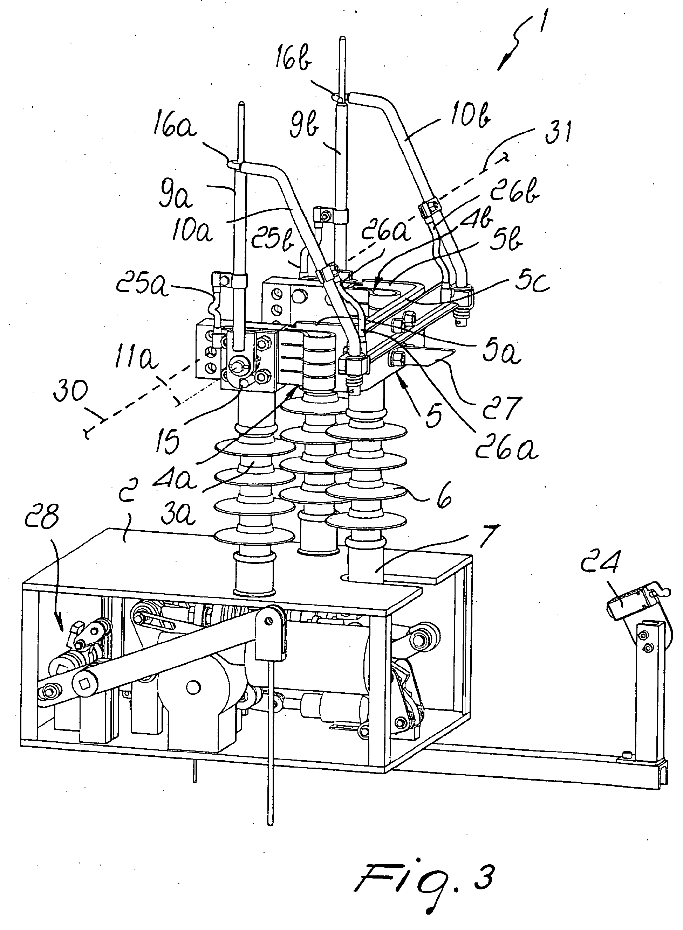

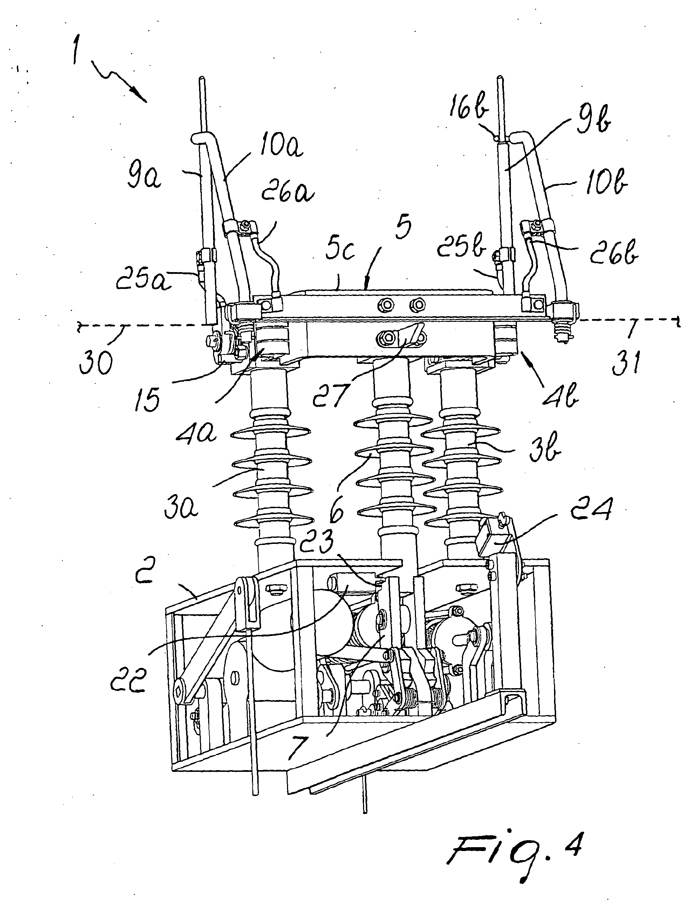

Completion of the rotation of the opening-closing lever 7 about the main axis 7a causes the spark-gap electrodes 10a, 10b fitted on the moving contact 5 to interfere by means of their hook-shaped portions with the spark-gap electrodes 9a, 9b connected to the fixed contacts 4a, 4b. This interference produces the rotation of the spark-gap electrodes 10a, 10b about the corresponding axes 17a, 17b with respect to the blocks 19a, 19b in contrast with the action of the springs 20a, 20b. This rotation of the spark-gap electrodes 10a, 10b allows the hook-shaped portions 16a, 16b to move beyond the spark-gap electrodes 9a, 9b and to then engage them as a consequence of the opposite rotation of the spark-gap electrodes 10a, 10b caused by the springs 20a, 20b as soon as said movement beyond the electrodes has occurred, as shown in Figures 3 and 4. At this point, the moving contact 5 is completely engaged with the fixed contacts 4a and 4b and the spark-gap electrodes 9a, 9b, are engaged with the spark-gap electrodes 10a, 10b. In this condition, the abutment 23 engages the electrical switch 22, indicating the closed position of the disconnector, as shown in Figure 4.

When the power lines 30, 31 are to be disconnected, one acts again on the opening-closing lever 7 so as to turn it about the main axis 7a with respect to the supporting structure 2 in the opposite direction to what has been explained above.

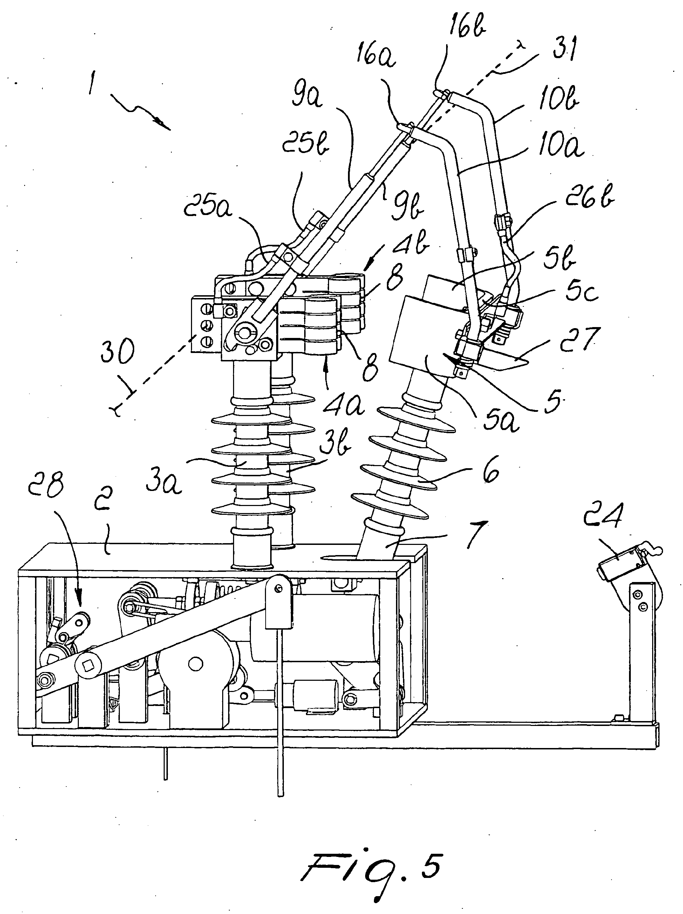

This rotation causes the disengagement of the moving contact 5 from the fixed contacts 4a, 4b, while the spark-gap electrodes 10a, 10b, fitted on the moving contact 5, remain engaged with the spark-gap electrodes 9a, 9b, which follow along a certain extent the spark-gap electrodes 10a, 10b in their spacing by rotating about the corresponding axes 11a, 11b, as shown in Figure 5. This rotation of the spark-gap electrodes 9a, 9b produces the loading of the springs 14, while the hook-shaped portions 16a, 16b slide along the end portion of the spark-gap electrodes 9a, 9b with a contact pressure that is sufficient to allow the temporary flow of current. In this condition, the magnetic field generated by the current that flows through the spark-gap electrodes reaches a high intensity at the contacts between said spark-gap electrodes, since the spark-gap electrodes form, in the contact region, a coil that has a very small radius.

It should be noted that when the hook-shaped portions 16a, 16b of the spark-gap electrodes 10a, 10b are proximate to the free end of the spark-gap electrodes 9a, 9b, between the moving contact 5 and the fixed contacts 10a, 10b there is a distance that excludes the triggering of an electric arc between these elements.

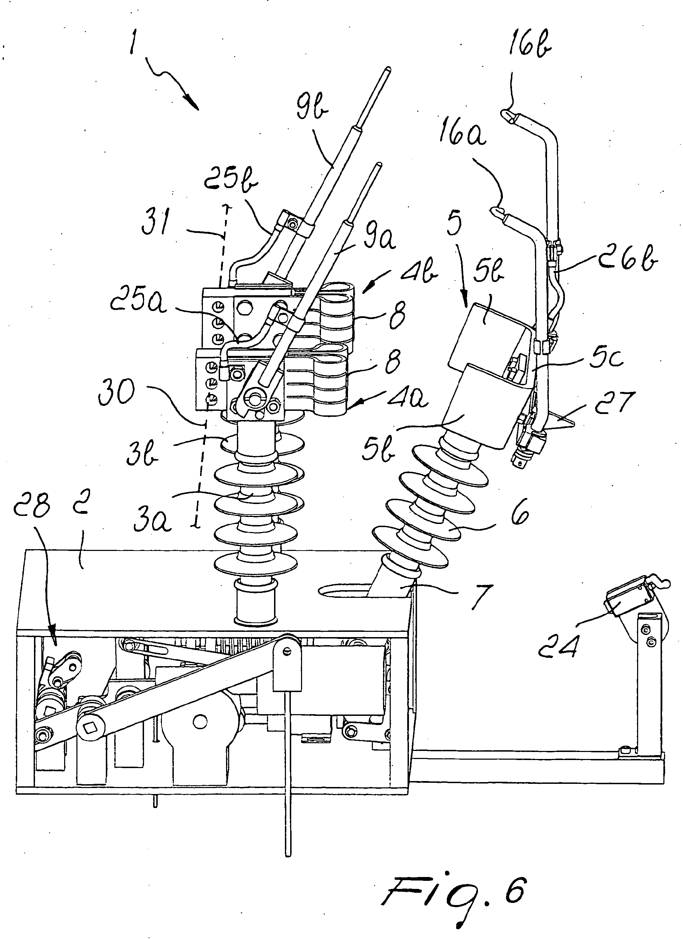

When the spacing of the spark-gap electrodes 10a, 10b is such as to cause the disengagement of the hook-shaped portions 16a, 16b of the spark-gap electrodes 10a, 10b from the free end of the spark-gap electrodes 9a, 9b, the elastic reaction of the springs 14 returns, at a very high speed, the spark-gap electrodes 9a, 9b to the initial position, as shown in Figure 6.

During this step, the electric arc is triggered between the spark-gap electrodes 9a, 9b and the spark-gap electrodes 10a, 10b.

The speed with which the spark-gap electrodes 9a, 9b and 10a, 10b move apart from each other is equal to the sum of the tangential speed caused by the rotation of the opening-closing lever 7 about the main axis 7a and of the speed with which the spark-gap electrodes 9a, 9b return to the initial condition by way of the springs 14.

Quenching of the electric arc in the disconnector according to the invention is facilitated:
-- by the outward magnetic breeze produced by opening the coils formed by each pair of spark-gap electrodes;
-- by the speed of the mutual spacing of the contacts between the spark-gap electrodes 9a, 9b, 10a, 10b, which produces, in addition to the magnetic breeze, a quick elongation of the electric arc, with the effect of increasing its resistance and accelerating its cooling.

Moreover, in the illustrated embodiment, current interruption occurs by means of two electric arcs in series, with resistances that add together, halving said arc current.

Completion of the rotation of the opening-closing lever 7 returns the disconnector to the condition shown in Figure 1.

In practice it has been observed that the disconnector according to the invention fully achieves the intended aim, since it ensures quenching of the electric arc during disconnector opening that is so fast as to considerably reduce the wear of the spark-gap electrodes, thus reducing the frequency of maintenance interventions required to ensure full reliability of the disconnector.

The disconnector thus conceived is susceptible of numerous modifications and variations, all of which are within the scope of the appended claims; all the details may further be replaced with other technically equivalent elements.

In practice, the materials used, so long as they are compatible with the specific use, as well as the dimensions, may be any according to requirements and to the state of the art.

The disclosures in Italian Patent Application no. MI2003A002311 from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An on-load disconnector for power lines, particularly for railroad power lines, comprising a supporting structure (2) that supports, by way of isolators (3a, 3b), at least one fixed contact (4a, 4b), which is connected to a power line (30, 31), and a moving contact (5), which is connected or can be connected to another power line (30, 31) and can engage said fixed contact (4a, 4b) in order to provide the electrical connection between said power lines (30, 31) or can be disengaged from said fixed contact (4a, 4b) in order to interrupt the electrical connection between said power lines (30, 31); at least two spark-gap electrodes (9a, 10a, 9b, 10b) are provided, which are electrically connected respectively to said fixed contact (4a, 4b) and to said moving contact (5), one (10a, 10b) spark-gap electrode being provided with engagement means (16a, 16b) that can engage the other spark-gap electrode (9a, 9b) after the engagement of said moving contact (5) with said fixed contact (4a, 4b) and can be disengaged from the other spark-gap electrode (9a, 9b) after the disengagement of said moving contact (5) from said fixed contact (4a, 4b), said moving contact (5) being fixed to an opening-closing lever (7), which is pivoted, in a region thereof that is spaced from said moving contact (5), to said supporting structure (2) about a main axis (7a); one (10a, 10b) of said two spark-gap electrodes being mounted on said opening-closing lever (7), **characterized in that** said first spark-gap electrode (9a, 9b) is provided as a substantially straight rod and is supported so that it can rotate, proximate to one of its longitudinal ends, by said supporting structure (2) about a rotation axis (11a) of the first spark-gap electrode (9a, 9b) that is substantially parallel to said main axis (7a); elastic means (14) are acting on said first spark-gap electrode (9a, 9b) in order to contrast against its rotation about said rotation axis (11a) of the first spark-gap electrode (9a, 9b) in the same direction in which said opening-closing lever (7) rotates, about said main axis (7a), during the disengagement of said moving contact (5) from the corresponding fixed contact (4a, 4b), said elastic means (14) being loaded during the disengagement of said moving contact (5) from said fixed contact (4a, 4b) and acting on one or both of said spark-gap electrodes (9a, 10a, 9b, 10b) in order to increase the speed with which one spark-gap electrode (9a, 9b) moves away from the other spark-gap electrode (10a, 10b) during their disengagement.

2. The disconnector according to claim 1, **characterized in that** said at least one fixed contact comprises two fixed contacts (4a, 4b), which are electrically connected to respective power lines (30, 31), which can be electrically connected to each other by engagement of said moving contact (5) with said fixed contacts (4a, 4b).

3. The disconnector according to claim 2, **characterized in that** each one of said fixed contacts (4a, 4b) is a contact with elastic laminas that face each other on a plane that is substantially perpendicular to said main axis (7a) and form between them a receptacle (8) for said moving contact (5); said moving contact (5) being provided like a lamina that is substantially U-shaped and can be inserted, during engagement, so that its two free arms (5a, 5b) are arranged on planes that are substantially perpendicular to said main axis (7a), in the receptacles (8) formed by said elastic laminas of the fixed contacts (4a, 4b).

4. The disconnector according to one or more of the preceding claims, **characterized in that** said spark-gap electrodes comprise two spark-gap electrodes (9a, 10a, 9b, 10b) for each one of said fixed contacts (4a, 4b): respectively, a first spark-gap electrode (9a, 9b), which is connected to the corresponding fixed contact (4a, 4b), and a second spark-gap electrode (10a, 10b), which is connected to said moving contact (5).

5. The disconnector according to one or more of the preceding claims, **characterized in that** said second spark-gap electrode (10a, 10b) is provided as a rod and is connected, by way of one of its ends, to said opening-closing lever (7); said engagement means comprising a hook-shaped portion (16a, 16b), which is provided at the other end of said second spark-gap electrode (10a, 10b) and can engage said first spark-gap electrode (9a, 9b).

6. The disconnector according to one or more of the preceding claims, **characterized in that** said second spark-gap electrode (10a, 10b) can rotate with respect to said opening-closing lever (7) in contrast with elastic return means (20a, 20b) about a rotation axis (17a, 17b) of the second spark-gap electrode (10a, 10b) that is substantially perpendicular to said rotation axis (11a) of the first spark-gap electrode (9a, 9b), in order to engage, by way of its hook-shaped portion (16a, 16b), with said first spark-gap electrode (9a, 9b) substantially at the end of the rotation of said opening-closing lever (7)that engages said moving contact (5) with the corresponding fixed contact (4a, 4b).

7. The disconnector according to one or more of the preceding claims, **characterized in that** said second spark-gap electrode (10a, 10b) has at least one bend along its extension in order to place its end provided with said hook-shaped portion (16a, 16b) on a plane that lies transversely to the extension of said first spark-gap electrode (9a, 9b).

8. The disconnector according to one or more of the preceding claims, **characterized in that** said second spark-gap electrode (10a, 10b) can disengage, with its hook-shaped portion (16a, 16b), from said first spark-gap electrode (9a, 9b) by sliding along said first spark-gap electrode (9a, 9b) so as to disengage said hook-shaped portion (16a, 16b) from the longitudinal end of said first spark-gap electrode (9a, 9b) that lies opposite the end that is pivoted to said supporting structure (2).

9. The disconnector according to one or more of the preceding claims, **characterized in that** it comprises sensor means (22, 24) for detecting the engaged and/or disengaged position of said moving contact (5) with respect to said fixed contacts (4a, 4b).

10. The disconnector according to claim 9, **characterized in that** said sensor means comprise a first electric switch (22), which is connected to said supporting structure (2) and can be contacted by a first abutment (23), which is connected to said opening-closing lever (7) upon completion of the rotation of said opening-closing lever (7) that engages said moving contact (5) with said fixed contacts (4a, 4b) for a closed position of the disconnector.

11. The disconnector according to claim 10, **characterized in that** said sensor means comprise a second electric switch (24), which is connected to said supporting structure (2) and can be contacted by a second abutment (27), which is connected to said opening-closing lever (7), upon completion of the rotation of said opening-closing lever (7) that disengages said moving contact (5) from said fixed contacts (4a, 4b) for an open position of the disconnector.

12. The disconnector according to one or more of the preceding claims, **characterized in that** at least the regions of mutual contact of said spark-gap electrodes (9a, 10a, 9b, 10b) are made of highly heat-resistant material.

13. The disconnector according to one or more of the preceding claims, **characterized in that** the body of said spark-gap electrodes (9a, 10a, 9b, 10b) is directly connected, by way of an electrical cable (25a, 25b, 26a, 26b), to the corresponding fixed contact (4a, 4b) or to the corresponding moving contact (5).

## Patentansprüche

1. Ein Lasttrennschalter für Stromversorgungsleitungen, insbesondere für Bahnstromversorgung, umfassend eine Stützkonstruktion (2), die mittels Isolatoren (3a, 3b) mindestens einen ortsfesten Kontakt (4a, 4b) stützt, der mit einer Stromversorgungsleitung (30, 31) verbunden ist, und einen beweglichen Kontakt (5), der mit der Stromversorgungsleitung (30, 31) verbunden oder verbindbar ist und den ortsfesten Kontakt (4a, 4b) eingreifen kann, um die elektrische Verbindung zwischen den Stromversorgungsleitungen (30, 31) bereitzustellen oder von dem ortsfesten Kontakt (4a, 4b) lösbar ist, um die elektrische Verbindung zwischen den Stromversorgungsleitungen (30, 31) zu unterbrechen; mindestens zwei Funkenstrecke-Elektroden (9a, 10a, 9b, 10b) sind bereitgestellt, die elektrisch mit dem ortsfesten Kontakt (4a, 4b) beziehungsweise mit dem beweglichen Kontakt (5) verbunden sind, wobei eine (10a, 10b) Funkenstrecke-Elektrode mit Eingreifmitteln (16a, 16b) bereitgestellt ist, die die andere Funkenstrecke-Elektrode (9a, 9b) nach dem Eingreifen des beweglichen Kontakts (5) mit dem ortsfesten Kontakt (4a, 4b) eingreifen kann und von der anderen Funkenstrecke-Elektrode (9a, 9b) nach Lösen des beweglichen Kontakts (5) vom ortsfesten Kontakt (4a, 4b) gelöst werden kann, wobei der bewegliche Kontakt (5) an einem Öffner/Schließer-Hebel (7) angebracht ist, der in einem vom beweglichen Kontakt (5) beabstandeten Bereich drehbar um eine Hauptachse (7a) an der Stützkonstruktion (2) gelagert ist, wobei eine (10a, 10b) der zwei Funkenstrecke-Elektroden an dem Öffner/Schließer-Hebel (7) montiert ist, **dadurch gekennzeichnet, dass** die erste Funkenstrecke-Elektrode (9a, 9b) im Wesentlichen als gerade Stange bereitgestellt ist und von der Stützkonstruktion (2) gestützt ist, damit sie benachbart einer ihrer Längsenden, um eine Drehachse (11a) der ersten Funkenstrecke-Elelttrode (9a, 9b), die im Wesentlichen parallel zur Hauptachse (7a) liegt, drehbar ist; elastische Mittel (14) wirken auf die erste Funkenstrecke-Elektrode (9a, 9b) ein, um ihrer Drehung um die Drehachse (11a) der ersten Funkenstrecke-Elektrode (9a, 9b) in der gleichen Richtung in der sich der Öffner/Schließer-Hebel während des Lösens des beweglichen Kontakts (5) vom entsprechenden ortsfesten Kontakt (4a, 4b) um die Hauptachse (7a) dreht, entgegenzuwirken, wobei die elastischen Mittel (14) während des Lösens des beweglichen Kontakts (5) vom ortsfesten Kontakt (4a, 4b) beaufschlagt werden und auf eine oder beide der Funkenstrecke-Elektroden (9a, 10a, 9b, 10b) einwirken, um die Geschwindigkeit mit der sich die eine Funkenstrecke-Elektrode (9a, 9b) von der anderen Funkenstrecke-Elektrode (10a, 10b) während des Lösens wegbewegt, zu erhöhen.

2. Der Trennschalter gemäß Anspruch 1, **dadurch gekennzeichnet, dass** der mindestens eine ortsfeste Kontakt zwei ortsfeste Kontakte (4a, 4b) umfasst, die mit jeweiligen Stromversorgungsleitungen (30, 31) elektrisch verbunden sind, die durch das Eingreifen des beweglichen Kontakts (5) mit den ortsfesten Kontakten (4a, 4b) miteinander elektrisch verbindbar sind.

3. Der Trennschalter gemäß Anspruch 2, **dadurch gekennzeichnet, dass** jeder der ortsfesten Kontakte (4a, 4b) ein Kontakt mit elastischen Platten ist, die sich auf einer Ebene gegenüberstehen, die im Wesentlichen senkrecht zur Hauptachse (7a) ist und zwischen ihnen eine Aufnahme (8) für den beweglichen Kontakt (5) bilden; wobei der bewegliche Kontakt (5) wie eine Platte bereitgestellt ist, die im Wesentlichen U-förmig ist und die während des Eingriffs, in die von den elastischen Platten der ortsfesten Kontakte (4a, 4b) gebildeten Aufnahmen (8) eingefügt werden kann, sodass ihre zwei freien Arme (5a, 5b) auf Ebenen angeordnet sind, die im Wesentlichen senkrecht zur Hauptachse (7a) sind.

4. Der Trennschalter gemäß einem oder mehreren der vorhergehenden Ansprüche, **dadurch gekennzeichnet, dass** die Funkenstrecke-Elektroden zwei Funkenstrecke-Elektroden (9a, 10a, 9b, 10b) für jeden der ortsfesten Kontakte (4a, 4b) umfassen: eine erste Funkenstrecke-Elektrode (9a, 9b), die mit dem entsprechenden ortsfesten Kontakt (4a, 4b) verbunden ist beziehungsweise eine zweite Funkenstrecke-Elektrode (10a, 10b), die mit dem beweglichen Kontakt (5) verbunden ist.

5. Der Trennschalter gemäß einem oder mehreren der vorhergehenden Ansprüche, **dadurch gekennzeichnet, dass** die zweite Funkenstrecke-Elektrode (10a, 10b) als Stange bereitgestellt ist und mittels eines ihrer Enden mit dem Öffner/Schließer-Hebel (7) verbunden ist; die Eingreifmittel einen hakenförmigen Teil (16a, 16b) umfassend, der am anderen Ende der zweiten Funkenstrecke-Elektrode (10a, 10b) bereitgestellt ist und die erste Funkenstrecke-Elektrode (9a, 9b) eingreifen kann.

6. Der Trennschalter gemäß einem oder mehreren der vorhergehenden Ansprüche, **dadurch gekennzeichnet, dass** die zweite Funkenstrecke-Elektrode (10a, 10b) in Bezug auf den Öffner/Schließer-Hebel (7) um eine Drehachse (17a, 17b) der zweiten Funkenstrecke-Elektrode (10a, 10b), die im Wesentlichen senkrecht zur Drehachse (11a) der ersten Funkenstrecke-Elektrode (9a, 9b) ist, mit entgegenwirkenden elastischen Rückkehrmitteln (20a, 20b) drehbar ist, um mittels seines hakenförmigen Teils (16a, 16b) mit der ersten Funkenstrecke-Elektrode (9a, 9b), im Wesentlichen am Ende der Drehung des Öffner/Schließer-Hebels (7), der den beweglichen Kontakt (5) mit dem entsprechenden ortsfesten Kontakt (4a, 4b) eingreift, einzugreifen.

7. Der Trennschalter gemäß einem oder mehreren der vorhergehenden Ansprüche, **dadurch gekennzeichnet, dass** die zweite Funkenstrecke-Elektrode (10a, 10b) entlang ihrer Ausdehnung mindestens eine Krümmung aufweist, um ihr mit dem hakenförmigen Teil (16a, 16b) bereitgestelltes Ende auf einer Ebene zu platzieren, die quer zur Ausdehnung der ersten Funkenstrecke-Elektrode (9a, 9b) liegt.

8. Der Trennschalter gemäß einem oder mehreren der vorhergehenden Ansprüche, **dadurch gekennzeichnet, dass** die zweite Funkenstrecke-Elektrode (10a, 10b) mit ihrem hakenförmigen Teil (16a, 16b) durch Gleiten entlang der ersten Funkenstrecke-Elektrode (9a, 9b) von der ersten Funkenstrecke-Elektrode (9a, 9b) lösbar ist, um den hakenförmigen Teil (16a, 16b) von dem Längsende, das entgegengesetzt dem an der Stützkonstruktion (2) drehbar gelagerten Ende liegt, der ersten Funkenstrecke-Elektrode (9a, 9b) zu lösen.

9. Der Trennschalter gemäß einem oder mehreren der vorhergehenden Ansprüche, **dadurch gekennzeichnet, dass** er Sensormittel (22, 24) zum Ermitteln der in Bezug auf die ortsfesten Kontakte (4a, 4b) eingegriffenen und/oder gelösten Position des beweglichen Kontaktes (5) umfasst.

10. Der Trennschalter gemäß Anspruch 9, **dadurch gekennzeichnet, dass** die Sensormittel einen ersten elektrischen Schalter (22) umfassen, der mit der Stützkonstruktion (2) verbunden ist und von einem ersten mit dem Öffner/Schließer-Hebel (7) verbundenen Widerlager (23) nach Beendigung der Drehung des Öffner/Schließee-Hebels (7), der die ortsfesten Kontakte (4a, 4b) für eine geschlossene Position des Trennschalters mit dem beweglichen Kontakt (5) eingreift, in Verbindung gebracht werden kann.

11. Der Trennschalter gemäß Anspruch 10, **dadurch gekennzeichnet, dass** die Sensormittel einen zweiten elektrischen Schalter (24) umfassen, der mit der Stützkonstruktion (2) verbunden ist und von einem ersten mit dem Öffner/Schließer-Hebel (7) verbundenen Widerlager (27) nach Beendigung der Drehung des Öffner/Schließer-Hebels (7), der den beweglichen Kontakt (5) von den ortsfesten Kontakten (4a, 4b) für eine offene Position des Trennschalters löst, in Verbindung gebracht werden kann.

12. Der Trennschalter gemäß einem oder mehreren der vorhergehenden Ansprüche,
**dadurch gekennzeichnet, dass** mindestens die Bereiche des gegenseitigen Kontakts der Funkenstrecke-Elektroden (9a, 10a, 9b, 10b) aus in hohem Maße hitzebeständigen Material hergestellt sind.

13. Der Trennschalter gemäß einem oder mehreren der vorhergehenden Ansprüche, **dadurch gekennzeichnet, dass** der Körper der Funkenstrecke-Elektroden (9a, 10a, 9b, 10b) mittels eines elektrischen Kabels (25a, 25b, 26a, 26b) direkt mit dem entsprechenden ortsfesten Kontakt (4a, 4b) oder mit dem entsprechenden beweglichen Kontakt (5) verbunden ist.

## Revendications

1. Sectionneur en charge pour lignes électriques, en particulier pour lignes électriques de chemin de fer, comprenant une structure de support (2) qui supporte, au moyen d'isolateurs (3a, 3b), au moins un contact fixe (4a, 4b), qui est relié à une ligne électrique (30, 31), et un contact mobile (5), qui est relié ou qui peut être relié à une autre ligne électrique (30, 31) et qui peut venir en prise avec ledit contact fixe (4a, 4b) afin de fournir la liaison électrique entre lesdites lignes électriques (30, 31) ou qui peut être désengagé dudit contact fixe (4a, 4b) afin d'interrompre la liaison électrique entre lesdites lignes électriques (30, 31); au moins deux cornes d'éclateur (9a, 10a, 9b, 10b) sont prévues, respectivement reliées électriquement audit contact fixe (4a, 4b) et audit contact mobile (5), une corne d'éclateur (10a, 10b) étant prévue avec des moyens d'engagement (16a, 16b) qui peuvent venir en prise avec l'autre corne d'éclateur (9a, 9b) après l'engagement dudit contact mobile (5) avec ledit contact fixe (4a, 4b) et peuvent être désengagés de l'autre corne d'éclateur (9a, 9b) après le désengagement dudit contact mobile (5) avec ledit contact fixe (4a, 4b), ledit contact mobile (5) étant fixé à in levier d'ouverture/fermeture (7) qui est articulé, dans une région de celui-ci espacée dudit contact mobile (5), à ladite structure de support (2) autour d'un axe principal (7a), l'une (10a, 10b) desdites deux cornes d'éclateur étant montée sur ledit levier d'ouverture/fermeture (7), **caractérisé en ce que** ladite première corne d'éclateur (9a, 9b) est prévue comme une tige sensiblement droite et est supportée de façon à pouvoir tourner, à proximité de l'une de ses extrémités longitudinales, par ladite structure de support (2) autour d'un axe de rotation (11a) de la première corne d'éclateur (9a, 9b) qui est sensiblement parallèle audit axe principal (7a); des moyens élastiques (14) agissent sur ladite corne d'éclateur (9a, 9b) afin de venir en contraste contre sa rotation autour dudit axe de rotation (11a) de ladite première corne d'éclateur (9a, 9b) dans la même direction dans laquelle ledit levier d'ouverture/fermeture (7) tourne, autour dudit axe principal (7a), lors du désengagement dudit contact mobile (5) dudit contact fixe correspondant (4a, 4b), lesdits moyens élastiques (14) étant chargés au cours du désengagement dudit contact mobile (5) dudit contact fixe (4a, 4b) et agissant sur l'une ou sur les deux desdites cornes d'éclateur (9a, 10a, 9b, 10b) afin d'augmenter la vitesse avec laquelle une corne d'éclateur (9a, 9b) s'écarte de l'autre corne d'éclateur (10a, 10b) au cours de leur désengagement.

2. Sectionneur selon la revendication 1, **caractérisé en ce que** ledit au moins un contact fixe comprend deux contacts fixes (4a, 4b), qui sont électriquement reliés à des lignes électriques respectives (30, 31), qui peuvent être électriquement reliées entre elles par engagement dudit contact mobile (5) avec lesdits contacts fixes (4a, 4b).

3. Sectionneur selon la revendication 1, **caractérisé en ce que** chacun desdits contacts fixes (4a, 4b) est un contact avec lamelles élastiques qui se trouvent l'une en face de l'autre sur un plan qui est sensiblement perpendiculaire audit axe principal (7a) et forment entre elles un réceptacle (8) pour ledit contact mobile (5); ledit contact mobile (5) étant prévu comme une lamelle qui est sensiblement en forme de U et peut être inséré, lors de l'engagement, de sorte que ses deux bras libres (5a, 5b) soient agencés sur des plans sensiblement perpendiculaires audit axe principal (7a), dans les réceptacles (8) formés par lesdits lamelles élastiques des contacts fixes (4a, 4b).

4. Sectionneur selon une ou plusieurs des revendications précédentes, **caractérisé en ce que** lesdites cornes d'éclateur comprennent deux cornes d'éclateur (9a, 10a, 9b, 10b) pour chacun desdits contacts fixes (4a, 4b); respectivement, une première corne d'éclateur (9a, 9b), qui est reliée au contact fixe correspondant (4a, 4b) et une deuxième corne d'éclateur (10a, 10b) qui est reliée audit contact mobile (5).

5. Sectionneur selon une ou plusieurs des revendications précédentes, **caractérisé en ce que** ladite deuxième corne d'éclateur (10a, 10b) est prévue comme une tige et est reliée, au moyen de l'une de ses extrémités, audit levier d'ouverture/fermeture (7); lesdits moyens d'engagement comprenant une partie en forme de crochet (16a, 16b) qui est prévu au niveau de l'autre extrémité de ladite deuxième corne d'éclateur (10a, 10b) et qui peut venir en prise avec ladite première corne d'éclateur (9a, 9b).

6. Sectionneur selon une ou plusieurs des revendications précédentes, **caractérisé en ce que** ladite deuxième corne d'éclateur (10a, 10b) peut pivoter par rapport audit levier d'ouverture/fermeture (7) en contraste avec des moyens de retour élastiques (20a, 20b) autour d'un axe de rotation (17a, 17b) de ladite deuxième corne d'éclateur (10a, 10b) qui est sensiblement perpendiculaire audit axe de rotation (11a) de ladite première corne d'éclateur (9a, 9b) afin de venir en prise, au moyen de sa partie en forme de crochet (16a, 16b) avec ladite première corne d'éclateur (9a, 9b) sensiblement à la fin de la rotation dudit levier d'ouverture/fermeture (7) qui engage ledit contact mobile (5) avec le contact fixe correspondant (4a, 4b).

7. Sectionneur selon une ou plusieurs des revendications précédentes, **caractérisé en ce que** ladite deuxième corne d'éclateur (10a, 10b) présente au moins un coude le long de son extension afin de placer son extrémité pourvue de ladite partie en forme de crochet (16a, 16b) sur un plan qui se trouve transversal à l'extension de ladite première corne d'éclateur (9a, 9b).

8. Sectionneur selon une ou plusieurs des revendications précédentes, **caractérisé en ce que** ladite deuxième corne d'éclateur (10a, 10b) peut se désengager, avec sa partie en forme de crochet (16a, 16b), de ladite première corne d'éclateur (9a, 9b) par coulissement le long de ladite première corne d'éclateur (9a, 9b) de sorte à désengager ladite partie en forme de crochet (16a, 16b) de ladite extrémité longitudinale de ladite première corne d'éclateur (9a, 9b) qui se trouve à l'opposé de l'extrémité qui est articulée à ladite structure de support (2).

9. Sectionneur selon une ou plusieurs des revendications précédentes, **caractérisé en ce qu'**il comprend des moyens de détection (22, 24) pour détecter la position engagée et/ou désengagée dudit contact mobile (5) par rapport auxdits contacts fixes (4a, 4b).

10. Sectionneur selon la revendication 9, **caractérisé en ce que** lesdits moyens de détection comprennent un premier interrupteur électrique (22) qui est relié à ladite structure de support (2) et peut être mis en contact par une première butée (23) qui est reliée audit levier d'ouverture/fermeture (7) après achèvement de la rotation dudit levier d'ouverture/fermeture (7) qui désengage ledit contact mobile (5) desdits contacts fixes (4a, 4b) pour une position fermée dudit sectionneur.

11. Sectionneur selon la revendication 10, **caractérisé en ce que** lesdits moyens de détection comprennent un deuxième interrupteur électrique (24) qui est relié à ladite structure de support (2) et peut être mis en contact par une deuxième butée (27) qui est reliée audit levier d'ouverture/fermeture (7) après achèvement de la rotation dudit levier d'ouverture/fermeture (7) qui désengage ledit contact mobile (5) desdits contacts fixes (4a, 4b) pour une position ouverte dudit sectionneur.

12. Sectionneur selon une ou plusieurs des revendications précédentes, **caractérisé en ce que** au moins les régions de contact mutuel desdites cornes d'éclateur (9a, 10a, 9b, 10b) sont faites de matériau hautement résistant à la chaleur.

13. Sectionneur selon une ou plusieurs des revendications précédentes, **caractérisé en ce que** le corps desdites cornes d'éclateur (9a, 10a, 9b, 10b) est directement relié, au moyen d'un câble électrique (25a, 25b, 26a, 26b) au contact fixe correspondant (4a, 4b) ou au contact mobile correspondant (5).
